# EUROPEAN PATENT APPLICATION

(11) **EP 4 215 587 A1**
(43) Date of publication of application: **26.07.2023**
(21) Application number: 21886096.3
(22) Date of filing: 22.10.2021
(51) Int. Cl.: C08L 101/14, B33Y 80/00, C04B 35/111, B29C 64/165, C08K 3/22, B33Y 70/00, C01F 7/021

(54) **PARTICULATE COMPOSITION AND MOLDED OBJECT**

(30) Priority: 27.10.2020 JP 2020179603
(71) Applicant: SUMITOMO CHEMICAL COMPANY, LIMITED, Tokyo 103-6020 (JP); Tokyo Institute of Technology, Tokyo 152-8550 (JP)
(72) Inventor: IKOMA, Toshiyuki, Meguro-ku, Tokyo 152-8550 (JP); HAMANO, Ryohei, Meguro-ku, Tokyo 152-8550 (JP); AZUMA, Norifumi, Tsukuba-shi, Ibaraki 300-3294 (JP); UOE, Kousuke, Niihama-shi, Ehime 792-8521 (JP); SADAOKA, Kazuo, Niihama-shi, Ehime 792-8521 (JP)
(74) Representative: Vossius & Partner Patentanwälte Rechtsanwälte mbB
(86) International application number: PCT/JP2021/039127
(87) International publication number: WO 2022/091978

(57) **Abstract**

A particulate composition contains α-alumina particles, and water-absorbing polymer particles. The content of the water-absorbing polymer particles is 2 parts by mass or more and 60 parts by mass or less with respect to 100 parts by mass of the α-alumina particles, and the content of the α-alumina particles in the particulate composition is 50% by mass or more.

## Description

### Technical Field

The present invention relates to a particulate composition and a molded object.

### Background Art

From the related art, a method for manufacturing a molded object of alumina particles by repeating forming a layer of alumina particles and binding a part of the layer of the alumina particles with a binder has been known. In the case of sintering the molded object, an alumina sintered object having a desired shape is obtained.

### Citation List

### Patent Literature

Patent Literature 1: Japanese Unexamined Patent Publication No. 2017-154967
Patent Literature 2: WO 2019/167898
Patent Literature 3: Japanese Unexamined Patent Publication No. 2018-140907
Patent Literature 4: Japanese Unexamined Patent Publication No. 2018-140908

### Summary of Invention

### Technical Problem

However, in the method of the related art, an apparent volume (an outer shape) may significantly contract in the process of obtaining the sintered object by sintering the alumina molded object, or the strength of the molded object may be insufficient.

The present invention has been made in consideration of the circumstances described above, and an object thereof is to provide a particulate composition that is capable of reducing a contraction in an apparent volume before and after sintering and of sufficiently increasing the strength of a molded object, and a molded object.

### Solution to Problem

A particulate composition according to the present invention is a particulate composition, containing: α-alumina particles; and water-absorbing polymer particles,
in which a content of the water-absorbing polymer particles is 2 parts by mass or more and 60 parts by mass or less with respect to 100 parts by mass of the α-alumina particles, and a content of the α-alumina particles in the particulate composition is 50% by mass or more.

A molded object according to the present invention is a molded object, containing: α-alumina particles; and a water-absorbing polymer,
in which a content of the water-absorbing polymer is 2 parts by mass or more and 60 parts by mass or less with respect to 100 parts by mass of the α-alumina particles, and a content of the α-alumina particles in the molded object is 50% by mass or more.

In addition, in the particulate composition and the molded object, the α-alumina particles may have a particle size distribution including one or a plurality of first peaks having an apex in 10 to 100 µm, and one or a plurality of second peaks having an apex in 0.1 to 10 µm.

In addition, in the particulate composition and the molded object, the alumina particles may have at least two second peaks, one second peak may have an apex in 1 to 10 µm, and the other second peak may have an apex in 0.1 to 1 µm.

In addition, in the particulate composition and the molded object, the one or the plurality of first peaks may have an apex in 10 to 30 µm.

In the particulate composition and the molded object, the α-alumina particles may contain 80% by mass or more of substantially fracture surface-free monocrystal α-alumina particles.

### Advantageous Effects of Invention

According to the present invention, the particulate composition that is capable of reducing a contraction in an apparent volume due to sintering and of sufficiently increasing the strength of a molded object, and the molded object of the alumina particles is provided.

### Brief Description of Drawings

FIG. 1(a) is a schematic sectional view of a particulate composition according to a first embodiment of the present invention,
FIG. 1(b) is a schematic sectional view of a molded object according to the first embodiment of the present invention, and FIG. 1(c) is a schematic sectional view of a sintered object according to the first embodiment of the present invention.
FIG. 2 is a graph illustrating a particle size distribution of water-absorbing polymer particles (RP-500S) used in Examples.
FIG. 3 is a graph illustrating a particle size distribution of water-absorbing polymer particles (RP-100S) used in Comparative Examples.
FIG. 4 is a diagram illustrating a particle size distribution of each of α-alumina particles used in Examples, and mixed α-alumina particles of Example 1.

### Description of Embodiments

### (Particulate Composition)

A particulate composition contains α-alumina particles and water-absorbing polymer particles, the content of the water-absorbing polymer particles is 2 parts by mass or more and 60 parts by mass or less with respect to 100 parts by mass of the α-alumina particles, and the content of the α-alumina particles in the particulate composition is 50% by mass or more.

### (a-Alumina Particles)

The α-alumina particles are particles containing 70% by mass or more of α-alumina, and the content of the α-alumina may be 80% by mass or more, may be 90% by mass or more, and may be 95% by mass or more.

The α-alumina particles may have a particle size distribution including one or a plurality of first peaks having an apex in 10 to 100 µm, and one or a plurality of second peaks having an apex in 0.1 to 10 µm. Here, the particle size distribution is a volume-based particle size distribution according to a laser diffraction method.

### (First Peak)

The apex of one or a plurality of first peaks is in a range of 10 to 100 µm. A preferred range of the apex of one or a plurality of first peaks is 10 to 30 µm, and a more preferred range is 15 to 25 µm. From the viewpoint that a sharp peak is preferable, D90/D10 at each of the first peaks is preferably 3 or less, and can also be 2 or less. Note that, D90 is a 90% cumulative particle diameter from the smallest particle diameter in the particle size distribution, and D10 is a 10% cumulative particle diameter from the smallest particle diameter in the particle size distribution.

It is preferable that a portion forming the first peak (in a case where there are a plurality of first peaks, all the first peaks) in the α-alumina particles contains 80% by mass or more of substantially fracture surface-free monocrystal α-alumina particles. The portion contains more preferably 90% by mass or more, even more preferably 95% by mass or more, and particularly preferably 99% by mass or more of the substantially fracture surface-free monocrystal α-alumina particles.

Note that, "substantially fracture surface-free" indicates that when each of the particles is observed with a scanning electron microscope (SEM), the particles are in a polyhedral shape, and the particles include only a surface that can be crystalline-tectonically specified, such as an r surface. An amorphous fracture surface of which a surface index is not capable of being specified, for example, is generated by processing such as pulverizing in order to obtain a required particle diameter. The substantially fracture surface-free monocrystal α-alumina particles specifically indicate monocrystal α-alumina particles in which the number of particles including the fracture surface is a specific number (for example, 20) or less when observing 100 particles with an SEM.

Note that, the portion forming one or a plurality of first peaks is a portion equal to or greater than a minimum value between the first peak (in a case where there are a plurality of first peaks, a peak having a minimum particle diameter among the first peaks) and the second peak (in a case where there are a plurality of second peaks, a peak having a maximum particle diameter among the second peaks) described below, in the particle size distribution curve. In a case where there is another peak on the larger particle diameter side than the first peak, the portion is up to a minimum value between the first peak (in a case where there are a plurality of first peaks, a peak having a maximum particle diameter among the first peaks) and the other peak (in a case where there are a plurality of other peaks, a peak having a minimum particle diameter among the other peaks).

The substantially fracture surface-free monocrystal α-alumina particles can be homogeneous and free from seed crystals inside, and can be in a polyhedral shape including eight or more surfaces. In addition, in such alumina particles, when a maximum particle diameter parallel to a hexagonal lattice surface of α-alumina that is a hexagonal close-packed lattice is set to D, and a particle diameter perpendicular to the hexagonal lattice surface is set to H, a D/H ratio can be 0.5 or more and 3.0 or less. Further, in such α-alumina particles, the content of sodium can be less than 0.05% by weight in terms of Na₂O, and an alumina purity can be 99.90% by weight or more.

### (Second Peak)

The apex of one or a plurality of second peaks is in 0.1 to 10 µm. A preferred range of the position of the apex of one or a plurality of second peaks is 0.2 to 5 µm, and a more preferred range is 0.3 to 4 µm.

There may be a plurality of second peaks. For example, an apex of one second peak can be in 1 to 10 µm, and an apex of the other second peak can be 0.1 to 1 µm. In this case, in particular, a tensile strength of a sintered object can be increased.

A portion forming the second peak (in a case where there are a plurality of second peaks, all the second peaks) may be monocrystal α-alumina particles, or may be polycrystal α-alumina particles.

It is preferable that the portion forming the second peak (in a case where there are a plurality of second peaks, all the second peaks) contains 80% by mass or more (more preferably 90% by mass or more, even more preferably 95% by mass or more, and particularly preferably 99% by mass or more) of substantially fracture surface-free monocrystal α-alumina particles. In this case, such substantially fracture surface-free monocrystal α-alumina particles can be homogeneous and free from seed crystals inside, and can be in a polyhedral shape including eight or more surfaces. In addition, in such substantially fracture surface-free monocrystal α-alumina particles, when a maximum particle diameter parallel to a hexagonal lattice surface of α-alumina that is a hexagonal close-packed lattice is set to D, and a particle diameter perpendicular to the hexagonal lattice surface is set to H, a D/H ratio can be 0.5 or more and 3.0 or less. Further, in such α-alumina particles, the content of sodium can be less than 0.05% by weight in terms of Na₂O, and an alumina purity can be 99.90% by weight or more.

Here, the portion forming one or a plurality of second peaks is a portion equal to or greater than a minimum value between the first peak (in a case where there are a plurality of first peaks, a peak having a minimum particle diameter among the first peaks) and the second peak (in a case where there are a plurality of second peaks, a peak having a maximum particle diameter among the second peaks), in the particle size distribution curve. In a case where there is another peak on the small particle diameter side than the second peak, the portion is up to a minimum value between the second peak (in a case where there are a plurality of second peaks, a peak having a minimum particle diameter among the second peaks) and the other peak (in a case where there are plurality of other peaks, a peak having a maximum particle diameter among the other peaks).

Each of the second peaks may be broad, or may be a sharp peak. In a case where the peak is sharp, D90/D10 at each of the second peaks can be 20 or less, preferably 15 or less, more preferably 10 or less, and even more preferably 5 or less.

When the mass of the portion forming one or a plurality of first peaks (in a case where there are a plurality of first peaks, all the first peaks) is set to 100 parts by mass, the mass of the portion forming one or a plurality of second peaks (in a case where there are a plurality of second peaks, all the second peaks) can be 20 to 500 parts by mass, preferably 25 to 100 parts by mass, and more preferably 30 to 60 parts by mass.

In a case where there are two or more second peaks, an apex of one second peak (a large second peak) is in 1 to 10 µm, and an apex of the other second peak (a small second peak) is in 0.1 to 1 µm, the "portion forming one or a plurality of second peaks (in a case where there are a plurality of second peaks, all the second peaks)" in the particle size distribution curve can be further divided into a portion forming the large second peak and a portion forming the small second peak. Here, the portion forming the large second peak and the portion forming the small second peak are separated from each other by a minimum value between the peaks. When the mass of the portion forming one or a plurality of first peaks (in a case where there are a plurality of first peaks, all the first peaks) is set to 100 parts by mass, the mass of the portion forming the large second peak can be 10 to 100 parts by mass, preferably 15 to 80 parts by mass, and more preferably 30 to 50 parts by mass. When the mass of the portion forming one or a plurality of first peaks (in a case where there are a plurality of first peaks, all the first peaks) is set to 100 parts by mass, the mass of the portion forming the small second peak can be 5 to 100 parts by mass, preferably 5 to 70 parts by mass, more preferably 5 to 50 parts by mass, and even more preferably 10 to 20 parts by mass.

In addition, the particle size distribution of the α-alumina particles may have or may not have an additional peak at a portion greater than 100 µm and/or a portion less than 0.1 µm. When the total mass of the α-alumina particles is set to 100 parts by mass, the mass of each portion forming the additional peak can be 5 parts by mass or less.

Such α-alumina particles can be easily obtained by mixing α-alumina particles in which an apex of a peak is in 10 to 100 µm in the particle size distribution, and α-alumina particles in which an apex of a peak is in 0.1 to 10 µm in the particle size distribution. The alumina particles forming each peak, for example, can be manufactured by a method described in Japanese Unexamined Patent Publication No. H6-191836 and Japanese Unexamined Patent Publication No. H7-206430, and are commercially available as Advanced Alumina manufactured by Sumitomo Chemical Company, Limited. Examples of the particles forming the first peak include Advanced Alumina AA-18 manufactured by Sumitomo Chemical Company, Limited. In addition, examples of the particles forming the second peak include Advanced Alumina AA-3 and AA-03 manufactured by Sumitomo Chemical Company, Limited. Note that, an apex of a peak of AA-18 is 20 µm in the particle size distribution, an apex of a peak of AA-3 is 4 µm in the particle size distribution, and an apex of a peak of AA-03 is 0.5 µm in the particle size distribution.

The α-alumina particles having an apex in 10 to 100 µm in the particle size distribution tend to suppress shrinkage during firing because the contact points between the alumina particles undergo necking growth during sintering, while the grain growth does not progress, and as a result the molded object is sintered while maintaining its microscopic structure. In addition, according to the α-alumina particles having an apex in 0.1 to 10 µm in the particle size distribution, sintering between large particles is accelerated to have a function of supplying alumina to a necking portion even while suppressing a grain growth of the large particles, and there is a tendency that the strength of the sintered object is easily improved.

### (Water-Absorbing Polymer Particles)

The water-absorbing polymer is a polymer material having properties of absorbing water over a short period of time in the case of being in contact with water, and of turning into a gel. Examples of such a polymer material include starch, sodium alginate, gum arabic, gelatin, casein, dextrin, methyl cellulose, hydroxyethyl cellulose, carboxymethyl cellulose, cellulose sulfate, cyanoethyl cellulose, polyvinyl alcohol, an acrylic acid-polyvinyl alcohol copolymer, acetoacetylated polyvinyl alcohol, a vinyl acetate-methyl acrylate copolymer, polyvinyl methyl ether, sodium polyacrylate, a methyl vinyl ether-maleic anhydride copolymer, an ethylene-maleic anhydride copolymer, a styrene-maleic anhydride copolymer, sodium polystyrene sulfonate, sodium polyvinyl sulfonate, polyvinyl benzyl trimethyl ammonium chloride, polydiallyl dimethyl ammonium chloride, polydimethyl aminoethyl methacrylate hydrochloride, polyvinyl pyridine, polyvinyl imidazole, polyethylene imine, polyamide polyamine, polyacryl amide, polyethylene oxide, polyvinyl pyrrolidone, and the like, and preferably include a vinyl acetate-based copolymer such as a vinyl acetate-methyl acrylate copolymer and an ethylene-vinyl acetate copolymer.

In the water-absorbing polymer, a polymer that is re-emulsified in the case of being mixed with water, and is capable of forming oil-in-water type emulsion is preferable. Examples of such a water-absorbing polymer include a vinyl acetate-based copolymer such as a vinyl acetate-methyl acrylate copolymer and an ethylene-vinyl acetate copolymer, an acrylic copolymer such as an acrylic acid ester copolymer, and the like.

An average particle diameter of the water-absorbing polymer particles can be 5 to 50 µm, preferably 5 to 30 µm, and particularly preferably 10 to 20 µm. Note that, the average particle diameter of the water-absorbing polymer particles can be obtained by measuring a feret diameter using an electron scanning microscope. For example, the average particle diameter can be calculated by performing length measurement and arithmetic average with respect to 100 particles in a condition where an acceleration voltage of the electron scanning microscope is 5 kV, and an observation magnification is 300 times.

### (Mass Ratio of Particulate Composition)

It is necessary that the content of the water-absorbing polymer particles in the particulate composition is 2 parts by mass or more and 60 parts by mass or less with respect to 100 parts by mass of the α-alumina particles, from the viewpoint of exhibiting a sufficient strength of the molded object. The content of the water-absorbing polymer particles may be 3 parts by mass or more, and may be 5 parts by mass or more, with respect to 100 parts by mass of the α-alumina particles. The content of the water-absorbing polymer particles can also be 50 parts by mass or less, 40 parts by mass or less, 35 parts by mass or less, and 30 parts by mass or less, with respect to 100 parts by mass of the α-alumina particles.

The content of the α-alumina particles in the particulate composition may be 50% by mass or more, may be 60% by mass or more, may be 70% by mass or more, and may be 80% by mass or more.

The particulate composition may contain hydraulic alumina particles, but it is preferable that the particulate composition does not contain the hydraulic alumina particles.

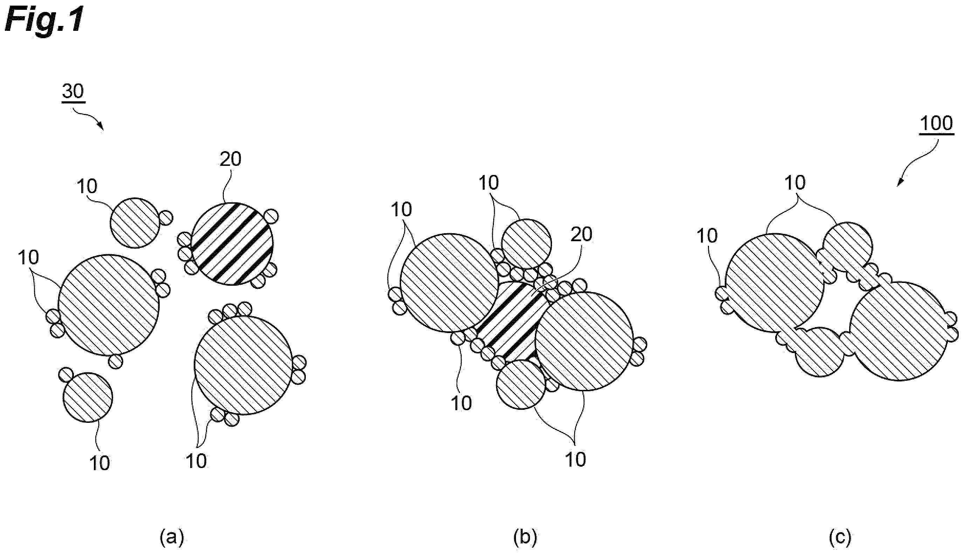

In the particulate composition, the α-alumina particles and the water-absorbing polymer particles may exist in any manner. For example, FIG. 1(a) is a schematic sectional view of a particulate composition 30 according to a first embodiment of the present invention. As illustrated in FIG. 1(a), an α-alumina particle 10 having a small particle diameter may be attached to the surface of an α-alumina particle 10 having a large particle diameter, or an α-alumina particle having a small particle diameter may be attached to the surface of a water-absorbing polymer particle 20. Fundamentally, the α-alumina particles 10 are not bound by the water-absorbing polymer, and the particulate composition 30 is capable of flowing without shape retention.

### (Manufacturing Method of Particulate Composition)

It is possible to obtain the particulate composition by mixing the α-alumina particles and the water-absorbing polymer particles by an arbitrary method.

In a dry state, the water-absorbing polymer particles are generally in the form of an aggregated object. Therefore, it is preferable to mix the α-alumina particles while crushing and dispersing an aggregate of the water-absorbing polymer particles, from the viewpoint of efficiently dispersing the water-absorbing polymer particles in the particulate composition.

A method of mixing while crushing is not particularly limited, and for example, can be implemented by supplying the α-alumina particles and the water-absorbing polymer particles to a crusher such as an airflow type crusher (a jet mill) and a medium type crusher (a vibrational mill and a ball mill). In particular, in order to prevent the mixing of chippings and the like from a medium, it is preferable to use a jet mill.

### (Use Method of Particulate Composition)

The particulate composition described above is suitable for an additive manufacturing application. Hereinafter, an additive manufacturing method using the particulate composition described above will be described.

### (Additive Manufacturing Method)

First, a layer of the particulate composition described above is formed on a base. The thickness of the layer is not limited, and for example, can be 30 to 200 µm. A formation method of the layer is not particularly limited, and a squeegee method or the like can be applied.

Next, a water-based ink is prepared. The water-based ink contains water as a main component (for example, 50% by mass or more), and may contain additives such as a defoaming agent such as an acetylene compound; a lubricant such as glycerin or diethylene glycol; and a surfactant.

It is not necessary that the water-based ink contains a binder such as polyallyl amine and a water-absorbing polymer, but the water-based ink may contain the binder to some extent.

Next, the water-based ink described above is supplied to a desired region (a region to be molded object) of the layer of the particulate composition. The supply of the water-based ink can be performed in an environment of 20 to 50°C. A supply method is not particularly limited, and a known method such as an ink jet method can be applied. Accordingly, the water-based ink is supplied only to a specific portion of the layer of the particulate composition, and the water-absorbing polymer in the particulate composition absorbs the water-based ink to be swollen/gelled, and for example, as illustrated in FIG. 1(b), binds the α-alumina particles 10.

The amount of water-based ink can be 10 to 50 parts by volume by setting an apparent volume of the portion to be molded object to 100 parts by volume. The temperature of the water-based ink to be supplied is not particularly limited, and is preferably 20 to 50°C.

Subsequently, the formation of the layer of the particulate composition described above and the supply of the water-based ink are sequentially repeated on the layer of the particulate composition to which the water-based ink is partially supplied as described above.

Accordingly, the α-alumina particles are bound by the water-absorbing polymer, only in a specific portion in a laminated structure of a plurality of layers of the particulate composition. That is, in the laminated structure of the plurality of layers of the particulate composition, the α-alumina particles are bound, and a molded object of the α-alumina particles is formed, in a region to which the water-based ink is supplied, whereas the α-alumina particles are in a state of not being bound, in a region to which the water-based ink is not supplied. Therefore, by removing the particulate composition that is not bound from the laminated structure of the layers of the particulate composition, a molded object having a three-dimensional shape in which the α-alumina particles are bound is obtained. In a case where portions to which the water-based ink is supplied are in contact with each other, in two adjacent layers of the particulate composition, the portions are also bound, thereby obtaining a molded object having a height greater than the height of each layer.

Note that, a step of heating the molded object in the particulate composition after the water-based ink is supplied can be suitably added. A heating temperature, for example, can be 30 to 100°C. The heating may be performed after the water-based ink is supplied to the specific portion of the layer of the particulate composition and before the next layer of the particulate composition is laminated on the layer to which the water-based ink is supplied, or the heating may be performed once collectively after the final layer of the particulate composition is formed and water is supplied to the final layer of the particulate composition.

The additive manufacturing method described above can be implemented by using a commercially available 3D printer.

### (Molded Object Obtained by Additive Manufacturing)

The molded object according to the embodiment of the present invention can be manufactured by the additive manufacturing method described above. The molded object contains the α-alumina particles and the water-absorbing polymer described above, and the content of the water-absorbing polymer is 2 parts by mass or more with respect to 100 parts by mass of the α-alumina particles. In the molded object, the α-alumina particles are bound by the water-absorbing polymer. The water-absorbing polymer contains water, can be swollen or gelled, and exhibits adhesiveness.

FIG. 1(b) is a schematic sectional view of the molded object according to the first embodiment of the present invention, the α-alumina particles are bound by the water-absorbing polymer 20 containing water, and the shape can be maintained.

The content of the water-absorbing polymer in the molded object may be 3 parts by mass or more, and may be 5 parts by mass or more, with respect to 100 parts by mass of the α-alumina particles. Even though there is no upper limit in the content of the water-absorbing polymer, it is preferable that the content of the water-absorbing polymer is 45% by mass or less, and the content can be 40% by mass or less, and 35% by mass or less.

Even though there is no particular limit in the content of the α-alumina particles in the molded object, it is preferable that the content of the α-alumina particles in the molded object is 60% by mass or more, and the content may be 70% by mass or more, and may be 80% by mass or more.

The particulate composition may contain hydraulic alumina particles and a cured material thereof, but it is preferable not to contain the hydraulic alumina particles and the cured material thereof.

The molded object may contain various additives except the alumina-based particles and the water-absorbing polymer. For example, the molded object may contain an organic substance (for example, an aggregating agent) except the water-absorbing polymer.

In addition, the molded object may contain additives such as a defoaming agent such as an acetylene compound; a lubricant such as glycerin or diethylene glycol; and a surfactant.

The molded object can be in an arbitrary shape. For example, the molded object is in the shape of a plate, a column, a honeycomb, or the like.

### (Manufacturing Method of Alumina Sintered Object)

The molded object obtained by the additive manufacturing described above is fired. A firing condition is not particularly limited, and it is preferable that the molded object is fired at 1300 to 1800°C for approximately 1 to 100 hours, in an oxygen-containing atmosphere such as an air atmosphere. Accordingly, the water-absorbing polymer is eliminated, the α-alumina particles are sintered, and an α-alumina sintered object having a three-dimensional shape is obtained.

FIG. 1(c) is a schematic sectional view illustrating a part of a sintered object 100 according to the first embodiment of the present invention. The α-alumina particles 10 are sintered.

### (Action)

According to the particulate composition and the molded object according to the embodiment described above, it is possible to make a high strength of the molded object and a low contraction rate when sintering compatible. The reason thereof is not apparent, but it is considered that the following factors contribute to the effect described above.

In this embodiment, not the ink but the water-absorbing polymer particles are contained in the particulate composition. Therefore, in the molded object, a sufficient amount of water-absorbing polymer can be contained with respect to the α-alumina particles, and the strength of the molded object increases. In contrast, in a case where the water-absorbing polymer is contained in the ink at a high concentration, a viscosity excessively increases, and it is difficult to discharge the ink, whereas in a case where the concentration of the water-absorbing polymer in the ink decreases to the extent that the ink can be discharged, it is not possible to sufficiently increase the amount of water-absorbing polymer that can be supplied to the α-alumina, and the strength of the molded object decreases. Therefore, it is difficult to handle the molded object and to obtain a sintered object in a desired shape.

Further, since the particulate composition contains the same α-alumina particles as those of a component after sintering, it is also possible to suppress a contraction in an apparent volume before and after sintering. In a case where the particulate composition mainly contains not the α-alumina but the hydraulic alumina or the like, a volume contraction before and after sintering increases, and it is difficult to prepare a fabricated material with a high accuracy.

The application of this particulate composition with respect to a commercially available ink jet powder lamination type (powder fixation type lamination method) 3D printer is particularly facilitated.

### Examples

α-alumina particles and water-absorbing polymer particles described below were prepared.

### (a-Alumina Particles)

Advanced alumina particles AA-18, AA-3, and AA-03, manufactured by Sumitomo Chemical Company, Limited, were prepared. An apex of a peak in a volume-based particle size distribution according to a laser diffraction method (hereinafter, may be referred to as an average particle diameter) of each of AA-18, AA-3, and AA-03 was 20 µm, 4 µm, and 0.5 µm. D90/D10 of each of alumina particles was 2.0, 3.2, and 14.9. Each of alumina particles is substantially fracture surface-free monocrystal α-alumina particles.

### (Water-Absorbing Polymer Particles)

An ethylene-vinyl acetate copolymerized resin powder RP-500S, manufactured by Sumika Chemtex Company, Limited, was prepared. This water-absorbing polymer particles contain 80% by mass or more of an ethylene-vinyl acetate copolymerized resin, and are particles having an apparent density of 0.5 g/ml and an average particle diameter of 17 µm.

### (Example 1)

### (Mixture of Particles)

AA-18, AA-03, and the water-absorbing polymer particles were simply mixed at a weight ratio of 63:10:10, and then, were supplied to a jet mill pulverizer (a horizontal jet mill pulverizer PJM-280NP, manufactured by Nippon Pneumatic Mfg. Co., Ltd.) at a supply velocity of 25 kg/hr, and were further mixed while being crushed to obtain mixed particles. A gauge pressure of an air supply port when crushing was 0.3 MPa.

As a result of checking the mixed particles with SEM, it was possible to check a state in which the alumina particles AA-03 were attached to the surface of the alumina particles AA-18 and the water-absorbing polymer particles.

The alumina particles AA-3 were further added to the obtained mixed particles, and were simply mixed to obtain a particulate composition in which AA-18, AA-3, AA-03, and the water-absorbing polymer particles were at a weight ratio of 63:27: 10: 10.

### (Measurement of Particle Size Distribution of Particulate Composition)

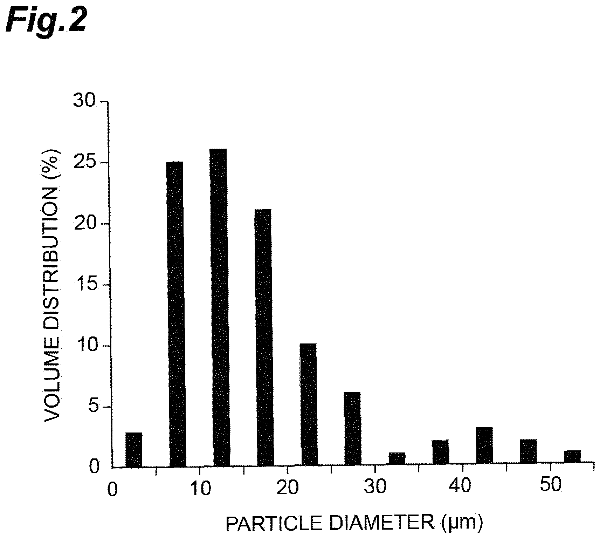

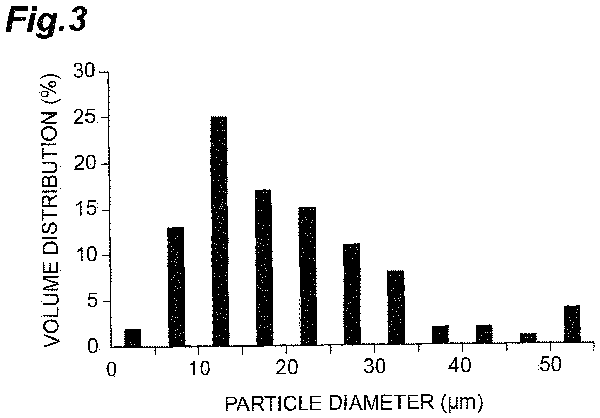

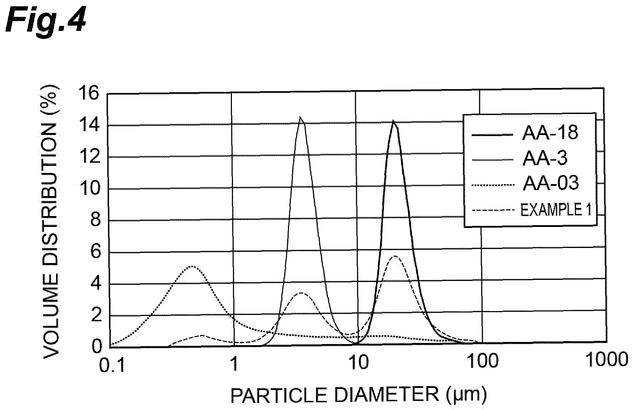

Volume-based particle size distributions of the water-absorbing polymer particles, the α-alumina particles, and the mixed α-alumina particles in Example 1 were measured by a laser diffraction method. The particle size distribution of the water-absorbing polymer particles (RP-500S) is shown in FIG. 2, the particle size distribution of the water-absorbing polymer particles (RP-100S) is shown in FIG. 3, and the particle size distributions of the α-alumina particles and the mixed α-alumina particles in Example 1 are shown in FIG. 4.

### (Molding of Small Column in 3D Printer)

The obtained particulate composition was introduced into a 3D printer (Projet (Registered Trademark) 460Plus, manufactured by 3D Systems, Inc.), and a columnar molded object having a diameter of 5.0 mm * a height of 10 mm was prepared by using an authentic ink for a Projet 460Plus 3D printer (Visijet PXL Clear, manufactured by 3D Systems, Inc.). The ink contains water as a main component. The amount of ink was 30% by volume with respect to an apparent volume of the molded object.

### (Sintering of Molded Object)

The obtained molded object was fired at 1500°C for 5 hours in the atmosphere to obtain a sintered object. A contraction rate before and after sintering was obtained from the diameter and the height of the molded object, and the diameter and the height of sintered object.

### (Measurement of Strength of Molded Object and Sintered Object)

A compressive strength of the molded object and the sintered object was measured by a compressive strength test. In the measurement, a texture analyzer TA.XTPlus, manufactured by STABLE MICRO SYSTEMS LIMITED, was used. When a compression load is applied to a columnar sample in a height direction, the compressive strength test is a value obtained by dividing a maximum load that the sample is capable of withstanding by a sectional area perpendicular to a weight direction of the sample before the test. The molded object is largely broken into two or more pieces or is broken into a plurality of small pieces or a powder by the compression load, and thus, the compression load is in a no-load state or the load considerably decreases. From the maximum load at this time, the compressive strength is obtained.

### (Example 2)

Example 2 was the same as Example 1 except that AA-18 and AA-03 were further added to the mixed particles, in addition to AA-3, and the ratio of the particulate composition was 63:27:10:5.

### (Example 3)

Example 3 was the same as Example 1 except that the water-absorbing polymer particles were further added to the mixed particles, in addition to AA-3, and the ratio of the particulate composition was 63:27:10:15.

### (Example 4)

Example 4 was the same as Example 1 except that the water-absorbing polymer particles were further added to the mixed powder, in addition to AA-3, and the ratio of the particulate composition was 63:27:10:30.

### (Example 5)

Example 5 was the same as Example 1 except that the water-absorbing polymer particles were further added to the mixed particles, in addition to AA-3, and the ratio of the particulate composition was 63:27:10:50.

### (Example 6)

Example 6 was the same as Example 1 except that the amount of ink to be supplied by the 3D printer was 24% by volume.

### (Example 7)

Example 7 was the same as Example 1 except that the amount of ink to be supplied by the 3D printer was 35% by volume.

### (Example 8)

Example 8 was the same as Example 1 except that a polyallyl amine hydrochloride (PAA) (a weight average molecular weight of 17500, manufactured by Sigma-Aldrich Co. LLC.) was added to the ink of the 3D printer at a concentration of 2.0 wt%. In the molded object, the amount of PAA with respect to alumina was 0.48% by mass.

### (Comparative Example 1)

Comparative Example 1 was the same as Example 8 except that the particulate composition was obtained without mixing the water-absorbing polymer to the mixed particles, and a supplied amount of water-based ink was 24 vol% with respect to the apparent volume of the molded object. In the molded object, the amount of PAA with respect to alumina was 0.48% by mass, as with Example 8.

### (Comparative Example 2)

Comparative Example 2 was the same as Comparative Example 1 except that an ethylene-vinyl acetate copolymerized resin powder (RP-100S, manufactured by Sumika Chemtex Company, Limited) was used by being solved in the ink, instead of PAA.

### (Comparative Example 3)

Comparative Example 3 was the same as Example 1 except that the particulate composition was obtained by mixing hydraulic alumina particles (BK-540: an average particle diameter D50 of 32.83 µm, manufactured by Sumitomo Chemical Company, Limited) and the water-absorbing polymer particles with a jet mill at a weight ratio of 100:11, and the amount of ink to be supplied by the 3D printer was 24% by volume.

### (Comparative Example 4)

Comparative Example 4 was the same as Comparative Example 3 except that α-alumina particles (AKP-53 (a center particle diameter of 0.2 µm), manufactured by Sumitomo Chemical Company, Limited) were added in addition to the hydraulic alumina particles and the water-absorbing polymer particles, a weight ratio of the hydraulic alumina particles, the α-alumina particles, and the water-absorbing polymer was 78:22:9, and the amount of ink to be supplied by the 3D printer was 35% by volume.

### (Comparative Example 5)

Comparative Example 5 was the same as Comparative Example 3 except that the weight ratio of the hydraulic alumina particles, the α-alumina particles, and the water-absorbing polymer was 74:26:32, and the amount of ink to be supplied by the 3D printer was 24% by volume.

### Results are shown in Table 1 and Table 2.

**[Table 1]**

| Table 1 | Particulate composition | | | | | | Water-based ink | | | Strength of molded object | Strength of sintered object | Contraction rate before and after sintering |
|---|---|---|---|---|---|---|---|---|---|---|---|---|
| | Alumina particles | | Water-absorbing polymer particles | | Amount of water-absorbing polymer particles with respect to 100 parts by mass of α-alumina particles (parts by mass) | Amount of α-alumina particles in particulate composition (mass%) | | | | | | |
| | Type | Mass ratio | Type | Added ratio with respect to alumina particles | | | Supplied amount | Binder | Mass ratio of binder | | | |
| | | AA-18:AA-3:AA-03 | | (mass%) | | | (vol% per apparent volume of molded object) | | (wt% with respect to alumina) | (kPa) | (MPa) | (%) |
| Example 1 | α-alumina | 63:27:10 | EVA | 10 | 10 | 90.9 | 30 | - | - | 163 | 14 | 4.6 |
| Example 2 | α-alumina | 63:27:10 | EVA | 5 | 5 | 95.2 | 30 | - | - | 132 | 9 | 2.7 |
| Example 3 | α-alumina | 63:27:10 | EVA | 15 | 15 | 87.0 | 30 | - | - | 699 | 27 | 4.0 |
| Example 4 | α-alumina | 63:27:10 | EVA | 30 | 30 | 76.9 | 30 | - | - | 1869 | 43 | 5.8 |
| Example 5 | α-alumina | 63:27:10 | EVA | 50 | 50 | 66.7 | 30 | - | - | 1303 | 30 | 8.2 |
| Example 6 | α-alumina | 63:27:10 | EVA | 10 | 10 | 90.9 | 24 | - | - | 103 | 8 | 5.3 |
| Example 7 | α-alumina | 63:27:10 | EVA | 10 | 10 | 90.9 | 35 | - | - | 297 | 20 | 42 |
| Example 8 | α-alumina | 63:27:10 | EVA | 10 | 10 | 90.9 | 30 | PAA | 0.48 | 128 | 10 | 2.8 |
| Comparative Example 1 | α-alumina | 63:27:10 | - | - | 0 | 100 | 24 | PAA | 0.48 | 8 | 4 | 1.7 |
| Comparative Example 2 | α-alumina | 63:27:10 | - | - | 0 | 100 | 24 | EVA | 0.48 | Ink discharge is not available and molding fails | | |

**[Table 2]**

| Table 2 | Particulate composition | | | | | | Water-based ink | | | Strength of molded object | Strength of sintered object | Contracti on rate before and after sintering |
|---|---|---|---|---|---|---|---|---|---|---|---|---|
| | Alumina particles | | Water-absorbing polymer particles | | Amount of water-absorbin g polymer particles with respect to 100 parts by mass of α-alumina particles (parts by mass) | Amount of α-alumina particles in particulate composition (mass%) | | | | | | |
| | Type | Mass ratio | Type | Added ratio with respect to alumina particles | | | Supplied amount | Binder | Mass ratio of binder | | | |
| | | BK-540:AKP-53 | | (mass%) | | | (vol% per apparent volume of molded object) | | (wt% with respect to alumina) | (kPa) | (MPa) | (%) |
| Comparative Example 3 | Hydraulic alumina | 100:0 | EVA | 11 | - | 0 | 24 | - | - | 19 | 0.36 | 10.5 |
| Comparative Example 4 | Hydraulic alumina + α-alumina | 78:22 | EVA | 9 | 40.9 | 20.2 | 35 | . | - | 130 | 6.5 | 16.5 |
| Comparative Example 5 | Hydraulic alumina + α-alumina | 74:26 | EVA | 32 | 123.1 | 19.7 | 24 | - | - | 226 | 5 | 21.0 |

In Comparative Examples, it was not possible to make a low contraction rate before and after sintering and a high strength of the molded object compatible, but in Examples, it was possible to make a low contraction rate before and after sintering and a high strength of the molded object compatible, and it was also possible to sufficiently increase the strength of the sintered object.

### Reference Signs List

10: α-alumina particle, 20: water-absorbing polymer particle, 30: particulate composition, 100: sintered object.

## Claims

1. A particulate composition, comprising:
α-alumina particles; and
water-absorbing polymer particles,
wherein a content of the water-absorbing polymer particles is 2 parts by mass or more and 60 parts by mass or less with respect to 100 parts by mass of the α-alumina particles, and
a content of the α-alumina particles in the particulate composition is 50% by mass or more.

2. The particulate composition according to claim 1,
wherein the α-alumina particles have a particle size distribution including one or a plurality of first peaks having an apex in 10 to 100 µm, and one or a plurality of second peaks having an apex in 0.1 to 10 µm.

3. The particulate composition according to claim 2,
wherein the α-alumina particles have at least two second peaks, one second peak has an apex in 1 to 10 µm, and the other second peak has an apex in 0.1 to 1 µm.

4. The particulate composition according to claim 2 or 3,
wherein the one or the plurality of first peaks have an apex in 10 to 30 µm.

5. The particulate composition according to any one of claims 1 to 4,
wherein the α-alumina particles contain 80% by mass or more of substantially fracture surface-free monocrystal α-alumina particles.

6. A molded object, comprising:
α-alumina particles; and
a water-absorbing polymer,
wherein a content of the water-absorbing polymer is 2 parts by mass or more and 60 parts by mass or less with respect to 100 parts by mass of the α-alumina particles, and
a content of the α-alumina particles in the molded object is 50% by mass or more.

7. The molded object according to claim 6,
wherein the α-alumina particles have a particle size distribution including one or a plurality of first peaks having an apex in 10 to 100 µm, and one or a plurality of second peaks having an apex in 0.1 to 10 µm.

8. The molded object according to claim 7,
wherein the α-alumina particles have at least two second peaks, one second peak has an apex in 1 to 10 µm, and the other second peak has an apex in 0.1 to 1 µm.

9. The molded object according to claim 7 or 8,
wherein the one or the plurality of first peaks have an apex in 10 to 30 µm.

10. The molded object according to any one of claims 6 to 9,
wherein the α-alumina particles contain 80% by mass or more of substantially fracture surface-free monocrystal α-alumina particles.
